# EUROPEAN PATENT APPLICATION

(11) **EP 4 459 198 A1**
(43) Date of publication of application: **06.11.2024**
(21) Application number: 24172341.0
(22) Date of filing: 25.04.2024
(51) Int. Cl.: F24F 6/12, F24F 11/00, F24F 11/62

(54) **HUMIDIFIER**

(30) Priority: 27.04.2023 KR 20230055140
(71) Applicant: LG Electronics Inc., Yeongdeungpo-gu Seoul 07336 (KR)
(72) Inventor: LEE, Sangheon, 08592 Seoul (KR); CHO, Kyunglok, 08592 Seoul (KR); LEE, Kunyoung, 08592 Seoul (KR); JEONG, Wonjun, 08592 Seoul (KR)
(74) Representative: Vossius & Partner Patentanwälte Rechtsanwälte mbB

(57) **Abstract**

A humidifier according to an embodiment of the present invention includes: a case; and a humidifying assembly disposed in the case and configured to generate mist, wherein the humidifying assembly includes a humidifying chamber defining a space in which water is contained, and first and second ultrasonic vibrators disposed under the humidifying chamber, wherein the humidifying assembly is configured to drive one of the first and second ultrasonic vibrators, or to drive the first and second ultrasonic vibrators with different driving signals, thereby adjusting the direction and shape of mist and providing various mist modes.

## Description

The present invention relates to a humidifier, and more particularly, to a humidifier configured to supply humidified clean air.

A humidifier is a device for supplying moisture-containing air to a room. The humidifier includes a water tank, and is classified into various types, such as ultrasonic humidifiers, heated humidifiers, evaporative humidifiers, or complex humidifiers, depending on humidification methods.

The humidifier is a device for vaporizing water to discharge humidified air with high moisture content. The humidifier may generate humidified air by evaporating water using natural vaporization, heating vaporization, and ultrasonic vibration.

Each evaporation method has its own merits and demerits. The evaporative humidification method has a drawback in that a user is required to frequently maintain a humidifying medium after use.

The ultrasonic humidifier includes a vibrator for generating vibrations using ultrasonic waves, and sprays water that is atomized by vibration of the vibrator. The ultrasonic humidifier has an effect in that a large amount of mist may be sprayed. Vaporization by ultrasonic vibration has problems in that air, humidified by atomizing supplied water by ultrasonic vibration, may not effectively flow into an indoor space, and if unsterilized water is used for humidification, unpleasant humid air may flow into the indoor space, and the ultrasonic vibrator is vulnerable to high-temperature heat.

The heating vaporization has a problem in that if hot humidified air is directly discharged, a safety accident may occur.

Korean Laid-Open Patent Publication No. KR10-2018-0094813, which is a related art, discloses a humidifier for providing heated, humidified air. Further, Korean Patent No. KR 10-0158806 as a related art discloses a humidifier for humidifying water, supplied from a water tank, by heating and ultrasonic vibrations.

Various types of existing humidifiers, as disclosed in the related arts, only allow for limited adjustment in which a discharge port for discharging humidified air is manually adjusted by users according to design of a mechanical part, such that the direction of mist flowing inside/outside of the humidifier may not be adjusted.

It is an objective of the present invention to solve the above and other problems.

It is another objective of the present invention to provide a humidifier capable of adjusting the direction and shape of mist.

It is yet another objective of the present invention to provide a humidifier capable of providing various mist modes.

It is yet another objective of the present invention to provide a humidifier with improved product life and reliability.

It is further another objective of the present invention to provide a humidifier capable of discharging together humidified air generated in a heating chamber and humidified air generated in a humidifying chamber.

The objectives of the present invention are not limited to the aforementioned objectives and other objectives not described herein will be clearly understood by those skilled in the art from the following description.

The present invention is specified by the independent claim. Preferred embodiments are defined by the dependent claims.

In order to achieve the above objectives, a humidifier according to an embodiment of the present invention includes a plurality of ultrasonic vibrators and controls each of the plurality of ultrasonic vibrators, thereby adjusting the direction and shape of mist and providing various mist modes.

In order to achieve the above objectives, a humidifier according to an embodiment of the present invention includes a plurality of ultrasonic vibrators and effectively controls each of the plurality of ultrasonic vibrators, thereby improving the product life.

In order to achieve the above objectives, a humidifier according to an embodiment of the present invention includes a plurality of ultrasonic vibrators and is configured to effectively determine whether a failure occurs in the ultrasonic vibrators and drive an ultrasonic vibrator which is in a normal state, thereby improving reliability.

In order to achieve the above objectives, a humidifier according to an embodiment of the present invention includes: a case; and a humidifying assembly disposed in the case and configured to generate mist, wherein the humidifying assembly includes a humidifying chamber defining a space in which water is contained, and first and second ultrasonic vibrators disposed under the humidifying chamber, thereby improving humidification performance and product life.

The humidifier according to an embodiment of the present invention may drive one of the first and second drive one of the first and second ultrasonic vibrators, or may drive the first and second ultrasonic vibrators with different driving signals, thereby adjusting the direction and shape of mist and providing various mist modes.

The humidifier according to an embodiment of the present invention may alternately drive the first and second ultrasonic vibrators according to a predetermined cycle, thereby improving the product life.

A duty ratio of a Pulse Width Modulation (PWM) driving signal for driving the first ultrasonic vibrator may be different from a duty ratio of a PWM driving signal for driving the second ultrasonic vibrator.

The duty ratios of the PWM driving signals for driving the first ultrasonic vibrator and the second ultrasonic vibrator may be individually adjusted.

In a predetermined mode, variable resistor values may be changed differently so that a value of a variable resistor, connected to the first ultrasonic vibrator, may be different from a value of a variable resistor connected to the second ultrasonic vibrator.

Each time the humidifying assembly is turned on, the humidifying assembly may be configured to drive a different ultrasonic vibrator.

The humidifying assembly may be configured to drive the first ultrasonic vibrator during a first time period to atomize the water contained in the humidifying chamber, and to drive the second ultrasonic vibrator during a second time period after the first time period to atomize the water contained in the humidifying chamber.

The first time period and the second time period may be repeated according to a predetermined cycle.

The first time period and the second time period may have a same length.

In response to a usage time of any one of the first and second ultrasonic vibrators reaching a reference time, the humidifying assembly may be configured to drive a remaining ultrasonic vibrator, and in response to a usage time of the remaining ultrasonic vibrator reaching the reference time, the humidifying assembly may be configured to reset the usage time.

The humidifying assembly may be configured to drive the first and second ultrasonic vibrators during a predetermined initial driving time, and then after lapse of the initial driving time, the humidifying assembly may be configured to turn off any one of the first and second ultrasonic vibrators.

The humidifier according to an embodiment of the present invention may further include: a first driving circuit configured to supply a first driving signal to the first ultrasonic vibrator to drive the first ultrasonic vibrator; a second driving circuit configured to supply a second driving signal to the second ultrasonic vibrator to drive the second ultrasonic vibrator; and a processor configured to receive the first and second driving signals through first and second feedback lines, connected between the first and second driving circuits and the first and second ultrasonic vibrators, to determine whether a failure occurs in the first and second ultrasonic vibrators.

Upon determining that any one of the first and second ultrasonic vibrators breaks down, the processor may be configured to maintain the broken ultrasonic vibrator in an off state, and to operate only a remaining ultrasonic vibrator.

The humidifying assembly may include: an inlet through which air is introduced into the humidifying chamber; an outlet through which mist generated in the humidifying chamber is discharged; a heating device configured to heat water and communicating with the humidifying chamber; and a body having a first opening communicating with the heating device, and a second opening communicating with the humidifying chamber, wherein the first and second ultrasonic vibrators may be spaced below the outlet.

The humidifier according to an embodiment of the present invention may further include: a suction port through which air is introduced into the case; a fan disposed in the case; a discharge port through which the air introduced through the suction port flows; an air-blowing passage through which air blown by the fan flows, the air-blowing passage extending toward the discharge port; and a humidification passage connecting the humidifying assembly and the discharge port, the humidification passage separated from the air-blowing passage.

A humidifier according to an embodiment of the present invention includes: a case; a humidifying assembly disposed in the case and including first and second ultrasonic vibrators; a first driving circuit configured to supply a first driving signal to the first ultrasonic vibrator to drive the first ultrasonic vibrator; a second driving circuit configured to supply a second driving signal to the second ultrasonic vibrator to drive the second ultrasonic vibrator; and a processor connected between the first driving circuit and the first ultrasonic vibrator through a first feedback line and connected between the second driving circuit and the second ultrasonic vibrator through a second feedback line, wherein the processor is configured to turn off any one of the first and second ultrasonic vibrators based on a signal input through the first and second feedback lines.

### EFFECTS OF THE INVENTION

According to at least one of the embodiments of the present invention, by adjusting the direction and shape of mist, various mist modes may be provided.

According to at least one of the embodiments of the present invention, by effectively controlling ultrasonic vibrators, the product life may be improved.

According to at least one of the embodiments of the present invention, by effectively determining whether a failure occurs in ultrasonic vibrators and driving an ultrasonic vibrator which is in a normal state, reliability may be improved.

According to at least one of the embodiments of the present invention, by discharging together humidified air generated in a heating chamber and humidified air generated in a humidifying chamber, thereby providing pleasant, humidified air.

The effects of the present invention are not limited to the aforesaid, and other effects not described herein will be clearly understood by those skilled in the art from the following description of the appended claims.

### BRIEF DESCRIPTION OF THE DRAWINGS

FIG. 1 is a perspective view of a humidifier according to an embodiment of the present invention.
FIG. 2 is an exploded view of a humidifier according to an embodiment of the present invention.
FIG. 3 is a cross-sectional view of a humidifier according to an embodiment of the present invention.
FIG. 4 is an enlarged cross-sectional view of a humidifier according to an embodiment of the present invention.
FIG. 5 is a diagram illustrating a portion of a humidifier according to an embodiment of the present invention.
FIG. 6 is a cutaway view of a portion of a humidifier according to an embodiment of the present invention.
FIG. 7 is a diagram illustrating a portion of a humidifier according to an embodiment of the present invention.
FIG. 8 is a diagram illustrating a portion of a humidifier according to an embodiment of the present invention.
FIG. 9 is a diagram referred to in the description of alternating control of vibrators according to an embodiment of the present invention.
FIG. 10 is a diagram referred to in the description of controlling the direction of mist according to an embodiment of the present invention.
FIGS. 11 to 15 are diagrams referred to in the description of operation of first and second vibrators according to various embodiments of the present invention.
FIG. 16 is a block diagram illustrating main components for controlling vibrators and diagnosing failure thereof according to an embodiment of the present invention.
FIG. 17 is a longitudinal cross-sectional view of a humidifying assembly according to an embodiment of the present invention.
FIG. 18 is a schematic view of a humidifier according to an embodiment of the present invention.

### DETAILED DESCRIPTION OF THE PREFERRED EMBODIMENTS

Hereinafter, the present invention will be described in detail with reference to the accompanying drawings, in which the same reference numerals are used throughout the drawings to designate the same or similar components, and a redundant description thereof will be omitted.

The terms "module" and "unit" for elements used in the following description are given simply in view of the ease of the description, and do not have a distinguishing meaning or role.

It will be noted that a detailed description of known arts will be omitted if it is determined that the detailed description of the known arts can obscure the embodiments of the invention. Further, the accompanying drawings are used to help easily understand various technical features and it should be understood that the embodiments presented herein are not limited by the accompanying drawings. As such, the present invention should be construed to extend to any alterations, and substitutes in addition to those which are particularly set out in the accompanying drawings.

It will be understood that, although the terms first, second, etc., may be used herein to describe various elements, these elements should not be limited by these terms. These terms are only used to distinguish one element from another.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

As used herein, the singular forms are intended to include the plural forms as well, unless the context clearly indicates otherwise.

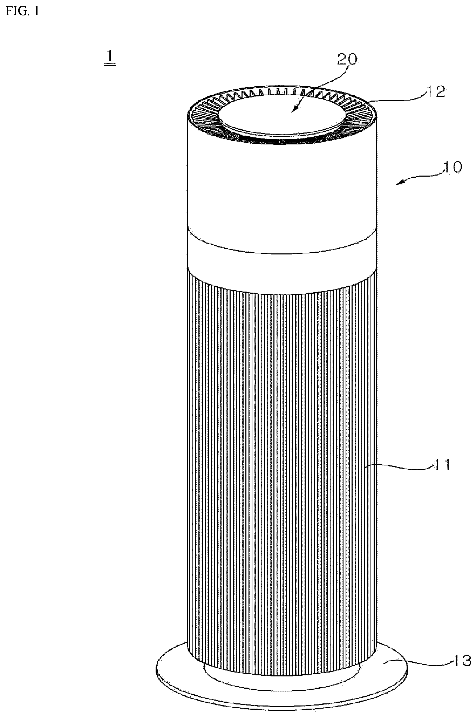

Referring to FIG. 1, a humidifier 1 will be described below.

FIG. 1 is a perspective view of the humidifier 1 according to an embodiment of the present invention.

The humidifier 1 may include a case 10. The case 10 may have a space formed therein. The case 10 may have a cylindrical shape.

The humidifier 1 may include a suction port or inlet 11. The suction port 11 may be formed along the circumference of the case 10. Air outside the humidifier 1 may be introduced into the case 10 through the suction port 11.

The humidifier 1 may include a discharge port or outlet 12. The discharge port 12 may be formed at a top portion of the case 10. The air drawn into the case 10 may be discharged to the outside of the case 10 through the discharge port 12.

The humidifier 1 may include a base 13. The base 13 may be disposed at the bottom of the case 10. The base 13 may have a greater outer diameter than an outer diameter of the case 10.

The humidifier 1 may include a water tank 20. The water tank 20 may be disposed in the case 10. The water tank 20 may have a space in which water is contained. The discharge port 12 may be formed radially outside of the water tank 20. The discharge port 12 may be formed to surround the water tank 20.

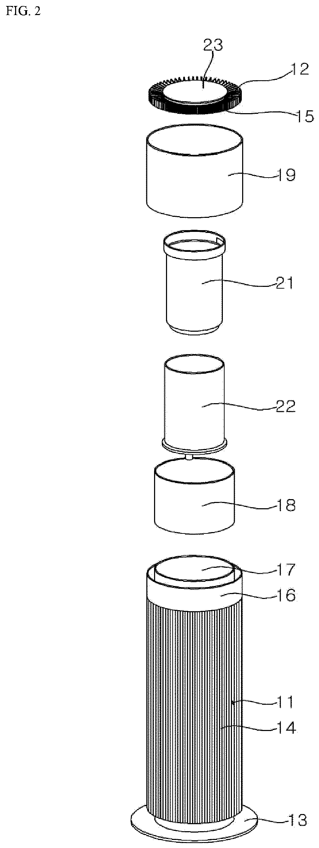

Referring to FIG. 2, the humidifier 1 will be described below.

FIG. 2 is an exploded view of the humidifier 1.

The humidifier 1 may have a suction grill 14. The suction grill 14 may be disposed along the circumference of the case 10. The suction grill 14 may form the suction port 11. The suction grill 14 may have a cylindrical shape.

The humidifier 1 may include a discharge grill 15. The discharge grill 15 may be disposed at a top portion of the case 10. The discharge grill 15 may form the discharge port 12. The discharge grill 15 may have an annular shape.

The humidifier 1 may include a first outer case 16. The first outer case 16 may have a cylindrical shape. The suction grill 14 may be removed from the first outer case 16. The first outer case 16 may form the exterior of the case 10.

The humidifier 1 may include a first inner case 17. The first inner case 17 may have a cylindrical shape. The first inner case 17 may be disposed radially inside of the first outer case 16. The first outer case 16 and the first inner case 17 may be radially spaced apart from each other.

The humidifier 1 may include a second outer case 19. The second outer case 19 may have a cylindrical shape. The second outer case 19 may be disposed on top of the first outer case 16. The second outer case 19 may form the exterior of the case 10.

The humidifier 1 may include a second inner case 18. The second inner case 18 may have a cylindrical shape. The second inner case 18 may be disposed on top of the first inner case 17. The second inner case 18 may be disposed radially inside of the second outer case 19. The second outer case 19 and the second inner case 18 may be radially spaced apart from each other.

The first outer case 16 and the second outer case 19 may be removably coupled to each other. However, the first outer case 16 and the second outer case 19 may be integrally formed with each other. The first outer case 16 and the second outer case 19 may be referred to as an "outer case."

The first inner case 17 and the second inner case 18 may be removably coupled to each other. However, the first inner case 17 and the second inner case 18 may be integrally formed with each other. The first inner case 17 and the second inner case 18 may be referred to as an "inner case."

The humidifier 1 may include a bucket 21. The bucket 21 may have a cylindrical shape with an open top. The bucket 21 may have a space formed therein for storing water.

The humidifier 1 may include a bucket housing 22. The bucket housing 22 may surround the bucket 21. The bucket housing 22 may have a cylindrical shape with an open top. The bucket 21 may be disposed in the bucket housing 22.

The humidifier 1 may include a bucket cover 23. The bucket cover 23 may be disposed on top of the bucket 21. The bucket cover 23 may be removably coupled to the discharge grill 15.

The water tank 20 may include the bucket 21, the bucket housing 22, and the bucket cover 23. The water tank 20 may be disposed inside the inner case 18. The water tank 20 and the inner case 18 may be radially spaced apart from each other.

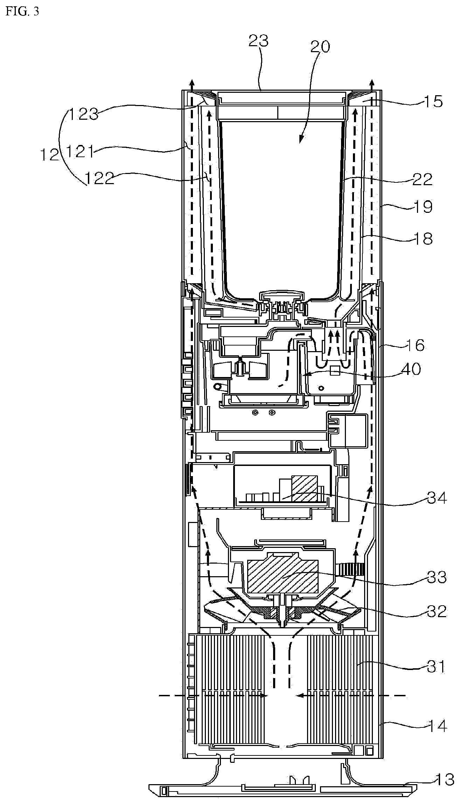

Referring to FIG. 3, the humidifier 1 will be described below.

FIG. 3 is a vertical cross-sectional view of the humidifier 1.

The humidifier 1 may include a filter 31. The filter 31 may be disposed in the suction grill 14. The filter 31 may have a cylindrical shape.

The humidifier 1 may include a fan 32. The fan 32 may be disposed above the filter 31. The fan 32 may be disposed in the suction grill 14.

The humidifier 1 may include a fan motor 33. The fan motor 33 may rotate the fan 32. The fan motor 33 may be disposed above the fan 32.

The humidifier 1 may include a controller 34. The controller 34 may be disposed in the case 10. The controller 34 may be disposed between the fan motor 33 and a humidifying assembly 40. The controller 34 may control driving of the fan motor 33 and the humidifying assembly 40. The controller 34 may include one or more processors. The controller 34 may include one or more printed circuit boards (PCBs).

The humidifier 1 may include the humidifying assembly 40. The humidifying assembly 40 may be disposed in the case 10. The humidifying assembly 40 may be disposed between the water tank 20 and the fan 32. The humidifying assembly 40 may atomize water supplied from the water tank 20 and supply the atomized water to the discharge port 12. A portion of air blown by the fan 32 may be introduced into the humidifying assembly 40.

The discharge grill 15 may be disposed between the water tank 20 and the outer case 19. The inner case 18 may be disposed between the water tank 20 and the outer case 19. The discharge grill 15 may be disposed at the top of the inner case 18.

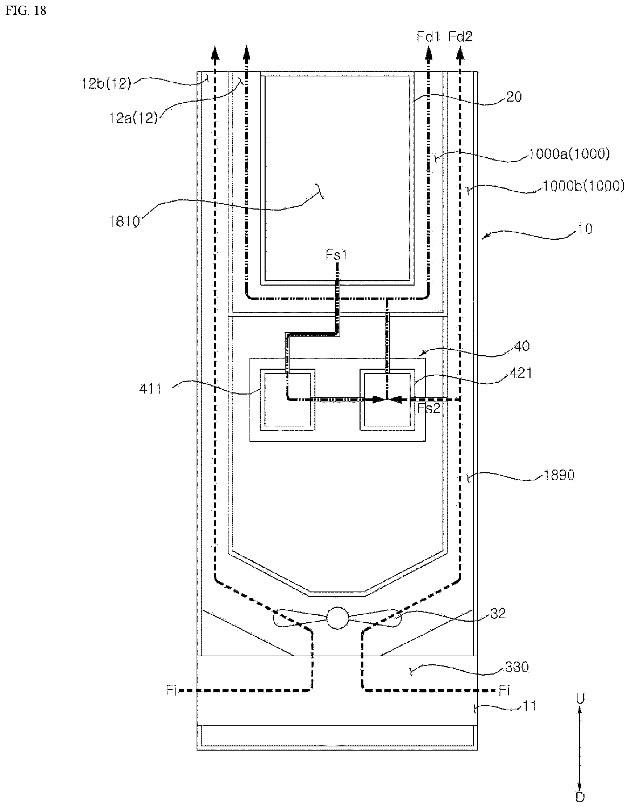

The discharge port 12 may include a first discharge port 121. The first discharge port 121 may be formed between the outer case 19 and the inner case 18. The air blown by the fan 32 may flow upward through the first discharge port 121. The first discharge port 121 may extend annularly. The first discharge port 121 may be referred to as a "air-blowing passage." In addition, the first discharge port 121 may include a first discharge passage 1000a and a first discharge port 12a (see FIG. 18).

The discharge port 12 may include a second discharge port 122. The second discharge port 122 may be formed between the inner case 18 and the water tank 20. Humidified air, having passed through the humidifying assembly 40, may flow upward through the second discharge port 122. The second discharge port 122 may extend annularly. The second discharge port 122 may be referred to as a "humidification passage." In addition, the second discharge port 122 may include a second discharge passage 1000b and a second discharge port 12b (see FIG. 18).

The discharge port 12 may include a combined outlet 123. The combined outlet 123 may be formed at the top of the first discharge port 121 and the second discharge port 122. The combined outlet 123 may be formed in the discharge grill 15. The combined outlet 123 may extend annularly. The combined outlet 123 may be formed between the outer case 19 and the bucket cover 23. Air flowing to the first discharge port 121 and air flowing to the second discharge port 122 may be mixed at the combined outlet 123.

The discharge port 12 may be a concept including the first discharge port 121, the second discharge port 122, and the combined outlet 123. However, the discharge port 12 may refer to a space which is open toward the outside of the case 10, and which is separate from the above components 121, 122, and 123. The discharge port 12 may be open toward the top of the case 10. The discharge port 12 may be formed in the discharge grill 15. The discharge port 12 may be formed to surround the water tank 20. The air blown by the fan 32 may flow through the discharge port 12.

The air-blowing passage 121 may be connected to the discharge port 12. A humidification passage 122 may be connected to the discharge port 12. The air in the air-blowing passage 121 and the air in the humidification passage 122 may be mixed at the discharge port 12.

The air introduced into the case 10 through the suction grill 14 may pass through the filter 31 to be blown upward by the fan 32. A portion of the air blown upward by the fan 32 may be introduced into the humidifying assembly 40, and a remaining portion of the air may flow upward through the first discharge port 121. The air introduced into the humidifying assembly 40 may flow upward through the second discharge port 122 while containing atomized water droplets. The air flowing through the first discharge port 121 and the humidified air flowing through the second discharge port 122 may join at the combined outlet 123 to be discharged upward from the humidifier 1.

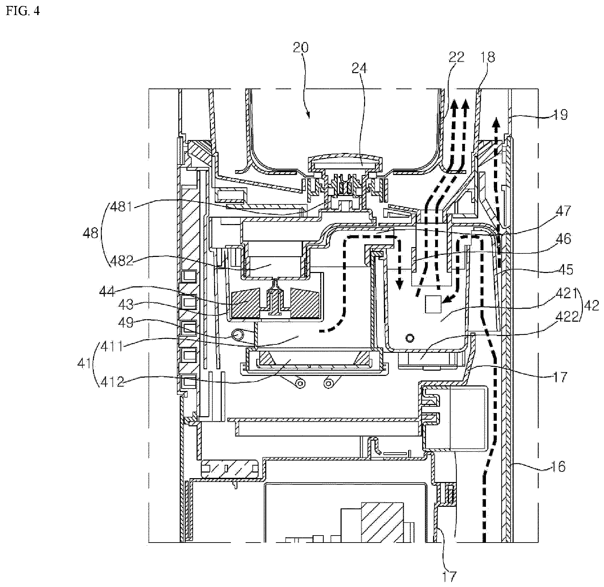

Referring to FIG. 4, the humidifier 1 will be described below.

FIG. 4 is a vertical cross-sectional view of a portion of the humidifier 1.

The humidifier 1 may include the humidifying assembly 40. The humidifying assembly 40 may be disposed below the water tank 20. The humidified air generated in the humidifying assembly 40 may be discharged upwards.

The humidifying assembly 40 may include a heating device 41. The heating device 41 may heat the introduced water and air.

The heating device 41 may include a heating chamber 411. The heating chamber 411 may have an internal space. The water contained in the water tank 20 may be introduced into the heating chamber 411.

The heating device 41 may include a heater 412. The heater 412 may be coupled to a lower side of the heating chamber 411. The heater 412 may apply heat to the inside of the heating chamber 411. The heater 412 may heat the water and air introduced into the heating chamber 411.

The humidifying assembly 40 may include a humidifying device 42. The humidifying device 42 may atomize the introduced water into droplets. The humidifying device 42 may change the introduced water into atomized droplets and discharge the droplets upwards.

The humidifying device 42 may include a humidifying chamber 421. The humidifying chamber 421 may include an internal space. Water heated by the heating device 41 may be introduced into the humidifying chamber 421.

The humidifying device 42 may include an ultrasonic vibrator 422. The ultrasonic vibrator 422 may be coupled to a lower side of the humidifying chamber 421. The ultrasonic vibrator 422 may generate vibrations using ultrasound. By driving the ultrasonic vibrator 422, the water in the humidifying chamber 421 may be atomized into droplets. A known principle of the ultrasonic humidifier may also be applied to the humidifying device 42.

The humidifying assembly 40 may include a valve housing 43. The valve housing 43 may be coupled to the heating device 41. The valve housing 43 may be disposed in the heating chamber 411.

The humidifying assembly 40 may include a valve 44. The valve 44 may be a floating valve. The valve 44 may be movably disposed in the valve housing 43. The valve 44 may move up and down in the valve housing 43 to selectively supply water into the heating chamber 41.

The humidifying assembly 40 may include an inlet 45. The inlet 45 may be connected to the humidifying device 42. The inlet 45 may be connected to the inside of the humidifying chamber 421. A portion of the air blown by the fan 32 (see FIG. 3) may be introduced into the humidifying chamber 421 through the inlet 45.

The humidifying assembly 40 may include an outlet 46. The outlet 46 may be connected to the humidifying device 42. The outlet 46 may project toward the inside of the humidifying chamber 421. The atomized water droplets generated in the humidifying device 42 may flow upward through the outlet 46.

The humidifying assembly 40 may include a connector 47. The connector 47 may connect the heating device 41 and the humidifying device 42. The connector 47 may connect the heating chamber 411 and humidifying chamber 421. The connector 47 may face the outlet 46.

The humidifying assembly 40 may include a supply port 48. The supply port 48 may connect the water tank 20 and the heating device 41. Water in the water tank 20 may be introduced into the heating device 41 through the supply port 48.

The supply port 48 may include a first supply port 481. The first supply port 481 may be connected to the water tank 20. The first supply port 481 may be connected to the lower side of the bucket housing 22.

The water tank 20 may include a discharge port 24. The discharge port 24 may be formed at a lower portion of the water tank 20. The discharge port 24 may be connected to the first supply port 481.

The supply port 48 may include a second supply port 482. The second supply port 482 may connect the first supply port 481 and the valve housing 43. Water introduced into the first supply port 481 may be introduced into the valve housing 43 through the second supply port 482.

The humidifying assembly 40 may include a connection pipe 49. The connection pipe 49 may connect the heating device 41 and the humidifying device 42. The connection pipe 49 may connect the heating chamber 411 and the humidifying chamber 421. Water in the heating chamber 411 may be introduced into the humidifying chamber 421 through the connection pipe 49.

A portion of air flowing between the outer case 16 and the inner case 17 may be introduced into the humidifying device 42 through the inlet 45. The air introduced into the humidifying device 42 may flow upward through the outlet 46 while containing the water droplets generated in the humidifying device 42. The air flowing upward through the outlet 46 may flow upward between the water tank 20 and the inner case 18.

The water in the water tank 20 may be introduced into the valve housing 43 through the supply port 48. The water in the valve housing 43 may be introduced into the heating device 41 by movement of the valve 44. The water introduced into the heating device 41 may be heated by the heater 412. The water heated in the heating chamber 411 may be introduced into the humidifying chamber 421 through the connection pipe 49. The water introduced into the humidifying chamber 421 may be atomized into droplets by the ultrasonic vibrator 422. The atomized water droplets may flow upward through the outlet 46 along with the air introduced through the inlet 45.

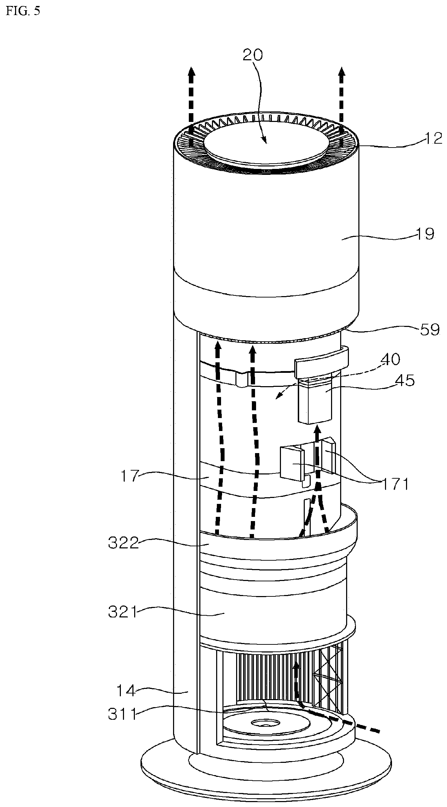

Referring to FIG. 5, the humidifier 1 will be described below.

FIG. 5 is a diagram illustrating the humidifier 1 from which the first outer case 16 is separated.

The humidifier 1 may include a filter mounting space 311. The filter mounting space 311 may be formed in the suction grill 14. The filter 31 (see FIG. 3) may be disposed in the filter mounting space 311. The air introduced through the suction grille 14 may pass through the filter mounting space 311 to flow upwards.

The humidifier 1 may include a fan housing 321. The fan 32 (see FIG. 3) may be disposed in the fan housing 321. The fan housing 321 may be disposed on top of the filter 31 (see FIG. 3).

The humidifier 1 may include a housing top portion 322. The housing top portion 322 may form a top portion of the fan housing 321. The housing top portion 322 may be radially outwardly spaced apart from the inner case 17. The air blown by the fan 32 (see FIG. 3) may flow upward through a space formed between the inner case 17 and the housing top 322.

The humidifier 1 may include a guide 171. The guide 171 may protrude radially outward from the inner case 17. The guide 171 may be disposed between the inlet 45 and the fan housing 321. A plurality of guides 171 may be arranged so as to be spaced apart in a circumferential direction of the inner case 17. A space between the plurality of guides 171 may vertically face the inlet 45. The space between the plurality of guides 171 may vertically face the housing top portion 322.

The humidifier 1 may include an inner grill 59. The inner grill 59 may be disposed above the humidifying assembly 40. The inner grill 59 may be disposed radially outside of the inner case 17. The inner grill 59 may be coupled to the outer case 19.

A portion of the air blown by the fan 32 (see FIG. 3) may be introduced into the inlet 45. The portion of the air blown by the fan 32 may be introduced into the inlet 45 through the space between the plurality of guides 171. The air introduced into the humidifying assembly 40 through the inlet 45 may be discharged through the discharge port 12 while containing atomized water droplets.

A supporter 352 may be fixed to the inlet 45. The supporter 352 may connect a fan device 351 and the inlet 45.

The portion of air blown by the fan 32 may flow upward through a space between the outer case 16 (see FIG. 3) and the inner case 17 to pass through the inner grill 59. The air having passed through the inner grill 59 may flow upward to be discharged through the discharge port 12.

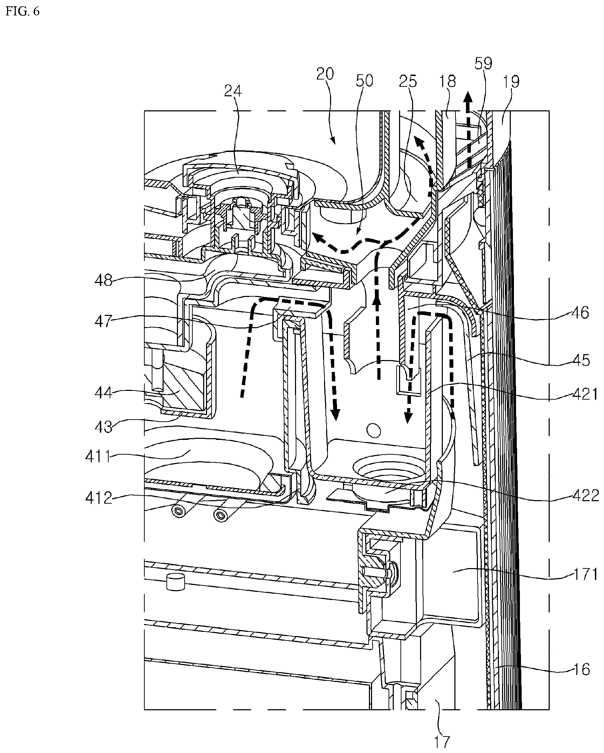

Referring to FIG. 6, the humidifier 1 will be described below.

FIG. 6 is an oblique, vertical cutaway view of a portion of the humidifier 1.

A portion of air flowing upward between the outer case 16 and the inner case 17 may be introduced into the inlet 45.

The guide 171 may vertically face the inlet 45.

The air introduced into the humidifying chamber 421 through the inlet 45 may be mixed with the water droplets generated by driving the ultrasonic vibrator 422. The humidified air, mixed with the water droplets, may flow upward through the outlet 46.

The humidifying chamber 421 may communicate with the heating chamber 411. The connector 47 may connect the humidifying chamber 421 and the heating chamber 411.

The air in the heating chamber 411 may be mixed with the air introduced into the humidifying chamber 421 to be discharged through the outlet 46. A portion of water introduced into the heating chamber 411 may be evaporated to be introduced in the form of water vapor into the humidifying chamber 421. The water vapor generated in the heating chamber 411 may be mixed with the humidified air in the humidifying chamber 421 to be discharged through the outlet 46.

The air flowing upward from the humidifying chamber 421 through the outlet 46 may be introduced between the water tank 20 and the inner case 18. The humidified air discharged through the outlet 46 may flow upward between the water tank 20 and the inner case 18.

The humidifier 1 may include an inner cover 50. The inner cover 50 may be connected to the outlet 46. The inner cover 50 may be disposed between the water tank 20 and the humidifying assembly 40. The air flowing through the outlet 46 may flow upward from the inner cover 50.

The water tank 20 may include a guide rim 25. The guide rim 25 may extend along the circumference of the water tank 20. The guide rim 25 may be spaced above the outlet 46. The air flowing through the outlet 46 may be diffused by the guide rim 25 in a circumferential direction of the water tank 20. The humidified air diffused in the circumferential direction of the water tank 20 may flow upward between the water tank 20 and the inner case 18.

A portion of the air flowing between the outer case 16 and the inner case 17 may flow upward through the inner grill 59. The inner grill 59 may be disposed between the outer case 19 and the inner case 18. The air having passed through the inner grill 59 may flow upward between the outer case 19 and the inner case 18.

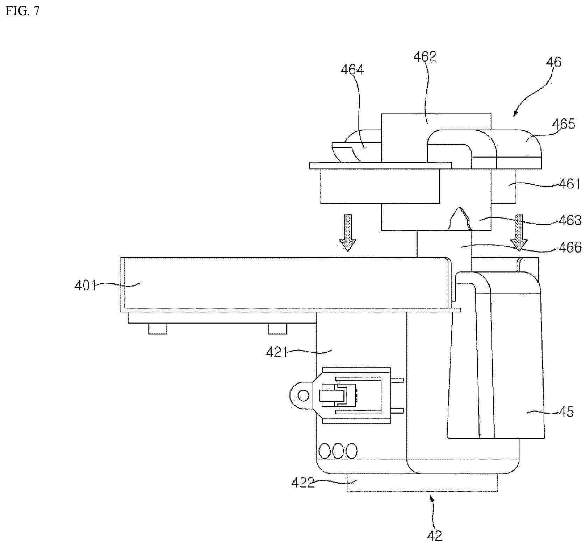

Referring to FIG. 7, the humidifier 1 will be described below.

FIG. 7 is a diagram illustrating a portion of the humidifying assembly 40.

The humidifying assembly 40 may include a humidifying device 42. The humidifying device 42 may generate mist. The humidifying device 42 may include the humidifying chamber 42 and the ultrasonic vibrator 422.

The humidifying assembly 40 may include a body 401. The body 401 may have a cylindrical shape with an open top. The heating device 41 (see FIG. 4) and the humidifying device 42 may be coupled to the body 401. The heating device 41 (see FIG. 4) and the humidifying device 42 may be coupled to a lower side of the body 401.

The humidifying assembly 40 may include an outlet 46. The air introduced into the humidifying device 42 through the inlet 45 may flow to the outlet 46 while containing mist. The outlet 46 may be coupled to the body 401. The outlet 46 may be coupled to an upper portion of the humidifying device 42.

The outlet 46 may include an outlet body 461. The outlet body 461 may be coupled to the body 401. The outlet body 461 may be inserted into the humidifying chamber 421.

The outlet 46 may include a mist outlet port 462. The mist outlet port 462 may protrude upward from the outlet body 461. The mist generated in the humidifying device 42 may flow upward through the mist outlet port 462.

The outlet 46 may include a mist inlet port 463. The mist inlet port 463 may protrude downward from the outlet body 461. The mist inlet port 463 may extend toward the inside of the humidifying chamber 421. The mist generated in the humidifying device 42 may flow toward the mist outlet port 462 through the mist inlet port 463.

The outlet 4 may include a connector coupling part 464. The connector coupling part 464 may extend toward the heating device 41 (see FIG. 4). The connector coupling part 464 may be coupled to the connector 47 (see FIG. 4).

The outlet 46 may include an inlet cover 465. The inlet cover 465 may be disposed above the inlet 45. The inlet cover 465 may cover an upper portion of the inlet 45.

The outlet 46 may include a supporter 466. The supporter 466 may extend downward from the outlet body 461. The supporter 466 may be disposed in the humidifying chamber 421. The supporter 466 may face a side wall of the humidifying chamber 421.

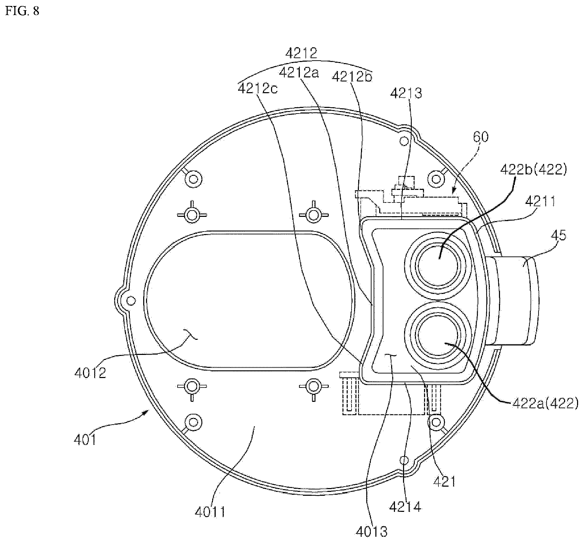

Referring to FIG. 8, the humidifier 1 will be described below.

FIG. 8 is a diagram illustrating a portion of the humidifying assembly 40 as viewed from above.

The body 401 may include a body plate 4011. The body plate 4011 may have a circular plate shape. The humidifying device 42 may be coupled to the body plate 4011.

The body 401 may include a first opening 4012. The first opening 4012 may be formed in the body plate 4011. The heating device 41 (see FIG. 6) may be coupled to the first opening 4012.

The body 401 may include a second opening 4013. The second opening 4013 may be formed in the body plate 4011. The humidifying device 42 may be coupled to the second opening 4013. The outlet 46 (see FIG. 4) may be inserted into the humidifying chamber 421 through the second opening 4013.

The internal space of the humidifying chamber 421 may communicate with the second opening 4013. There may be a plurality of ultrasonic vibrators 422.

The humidifying chamber 421 may include an outer wall 4211. The outer wall 4211 may be coupled to the inlet 45.

The humidifying chamber 421 may include an inner wall 4212. The inner wall 4212 may be spaced apart from the outer wall 4211. The internal space of the humidifying chamber 421 may be formed between the outer wall 4211 and the inner wall 4212. The inner wall 4212 may be disposed between the first opening 4012 and the outer wall 4211.

The inner wall 4212 may include a wall surface portion 4212a. The wall surface portion 4212a may face the outer wall 4211.

The inner wall 4212 may include a first corner portion 4212b. The first corner portion 4212b may extend outside of the wall surface portion 4212a. The first corner portion 4212b may be curved toward the center of the body 401.

The inner wall 4212 may include a second corner portion 4212c. The second corner portion 4212c may extend outside of the wall surface portion 4212a. The second corner portion 4212c may be curved toward the center of the body 401.

The wall surface portion 4212a may be disposed between the first corner portion 4212b and the second corner portion 4212c.

The humidifying chamber 421 may include a first side wall 4213. The first side wall 4213 may connect the outer wall 4211 and the inner wall 4212. The first side wall 4213 may be connected to the first corner portion 4212b.

The humidifying chamber 421 may include a second side wall 4214. The second side wall 4214 may connect the outer wall 4211 and the inner wall 4212. The second side wall 4214 may be connected to the second corner portion 4212c.

The first side wall 4213 and the second side wall 4214 may be spaced apart from each other. The internal space of the humidifying chamber 421 may be formed between the first side wall 4213 and the second side wall 4214.

The humidifier 1 may include a sterilizer 60. The sterilizer 60 may be disposed in the humidifying device 42. The sterilizer 60 may emit ultraviolet light toward the humidifying chamber 421.

The humidifier 1 includes the case 10 and the humidifying assembly 40 disposed in the case 10 and configured to generate mist.

The humidifying assembly 40 may include a plurality of ultrasonic vibrators 422 disposed under the humidifying chamber 421 to improve humidification performance. In addition, by controlling each of the plurality of ultrasonic vibrators 422, the humidifying assembly 40 may adjust the direction and shape of mist, and may provide various mist modes.

The humidifying assembly 40 may include at least first and second ultrasonic vibrators 422a and 422b. In addition, the humidifying assembly 40 may drive both or any one of the first and second ultrasonic vibrators 422a and 422b according to a user's request and current circumstances, or by controlling the first and second ultrasonic vibrators 422a and 422b with different output values, thereby improving humidification performance and product life adjusting the direction and shape of mist, providing various mist modes.

As described above with reference to FIGS. 1 to 8, the humidifying assembly 40 may include the inlet 45 through which air is introduced into the humidifying chamber 421, and the outlet 46 through which mist generated in the humidifying chamber 421 is discharged, and the first and second ultrasonic vibrators 422a and 422b may be spaced apart from each other at the lower side of the outlet 46.

Particularly, the outlet 46 may protrude toward the inside of the humidifying chamber 421, and the first and second ultrasonic vibrators 422a and 422b may be disposed on a lower side in a protruding direction of the outlet 46.

In addition, the humidifying assembly 40 may further include the heating device 41 for heating the introduced water and air, and the heating device 41 may communicate with the humidifying chamber 421. The humidifying chamber 421 may communicate with the heating chamber 411 into which the water contained in the water tank 20 is introduced, and the water heated by the heating device 41 may be introduced into the humidifying chamber 421. Accordingly, cleaner and humid air may be provided.

In addition, the humidifier 1 may include the suction port 11 through which air is introduced into the case 10, the fan 32 disposed in the case 10, the discharge port 12 through which the air introduced through the suction port 11 flows, the air-blowing passage 121 through which air blown by the fan 32 flows and which extends toward the discharge port 12, and the humidification passage 122 which connects the humidifying assembly 40 and the discharge port 12 and which is separated from the air-blowing passage 121.

The air introduced into the case 10 may pass through the filter 31 to be blown upward by the fan 32. Aportion of the air blown upward by the fan 32 may be introduced into the humidifying assembly 40, and a remaining portion thereof may flow upward through the first discharge port 121. The air introduced into the humidifying assembly 40 may flow upward through the second discharge port 122 while containing atomized water droplets. The air flowing through the first discharge port 121 and the humidified air flowing toward the second discharge port 122 may be mixed to be discharged upward from the humidifier 1. Accordingly, the humidified air generated in the heating chamber 411 and the humidified air generated in the humidifying chamber 421 may be discharged together, such that pleasant, humidified air may be provided.

Meanwhile, the humidifying assembly 40 may drive any one of the first and second ultrasonic vibrators 422a and 422b, or may drive the first and second ultrasonic vibrators 422a and 422b with different driving signals.

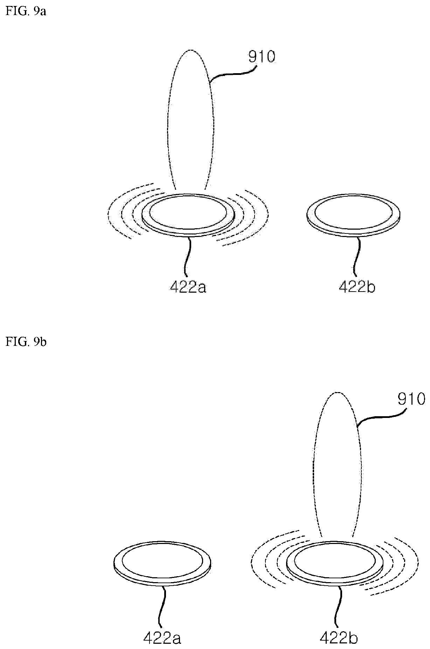

FIG. 9 is a diagram referred to in the description of alternating control of vibrators according to an embodiment of the present invention, in the case where one of the first and second ultrasonic vibrators 422a and 422b is driven.

Referring to (a) of FIG. 9, by driving only the first ultrasonic vibrator 422a of the first and second ultrasonic vibrators 422a and 422b, mist 910 in the form of a water column may be generated above the first ultrasonic vibrator 422a. Further, referring to (b) of FIG. 9, by driving only the second ultrasonic vibrator 422b of the first and second ultrasonic vibrators 422a and 422b, mist 910 in the form of a water column may be generated above the second ultrasonic vibrator 422b.

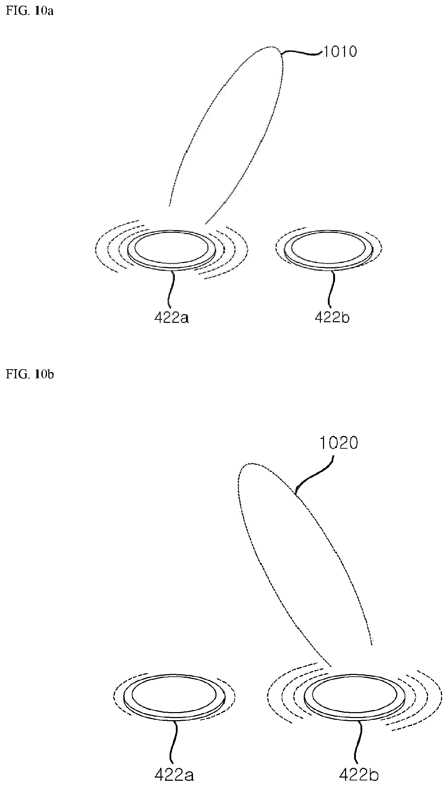

FIG. 10 is a diagram referred to in the description of controlling the direction of mist according to an embodiment of the present invention, in which the shape of mist is changed by driving the first and second ultrasonic vibrators 422a and 422b by different driving signals (output values).

Referring to (a) of FIG. 10, the first ultrasonic vibrator 422a operates in response to a driving signal corresponding to a "large" amount of mist, and the second ultrasonic vibrator 422b operates in response to a driving signal corresponding to a "small" amount of mist. In addition, referring to (b) of FIG. 10, the first ultrasonic vibrator 422a operates in response to a driving signal corresponding to a "small" amount of mist, and the second ultrasonic vibrator 422b operates in response to a driving signal corresponding to a "large" amount of mist.

For example, the humidifying assembly 40 may control the amount of mist by adjusting a current supplied to the first and second ultrasonic vibrators 422a and 422b.

According to an embodiment of the present invention, by adjusting duty ratios of pulse width modulation (PWM) driving signals supplied to the first and second ultrasonic vibrators 422a and 422b, the current supplied to the first and second ultrasonic vibrators 422a and 422b may be changed to control the amount of mist. If a duty ratio of the PWM driving signal for driving the first ultrasonic vibrator 422a is different from a duty ratio of the PWM driving signal for driving the second ultrasonic vibrator 422b, the first and second ultrasonic vibrators 422a and 422b may operate for different amounts of mist.

The humidifying assembly 40 may form various shapes of mist by individually adjusting the duty ratios of the PWM driving signals for driving the first ultrasonic vibrator 422a and the second ultrasonic vibrator 422b.

Alternatively, in a predetermined mode, the humidifying assembly 40 may change variable resistor values differently so that a value of a variable resistor, connected to the first ultrasonic vibrator 422a, is different from a value of a variable resistor connected to the second ultrasonic vibrator 422b, thereby adjusting the current supplied to the first and second ultrasonic vibratos 422a and 422b to control the amount of mist.

The overall shape of mists 1010 and 1020 is inclined from a side where a mist amount is set to high toward a side where a mist amount is set to low. Referring to (a) of FIG. 10, the mist 1010 may be in the form of a water column that is inclined from above the first ultrasonic vibrator 422a toward the second ultrasonic vibrator 422b. In addition, referring to (b) of FIG. 10, the mist 1020 may be in the form of a water column that is inclined from above the second ultrasonic vibrator 422b toward the first ultrasonic vibrator 422a.

Various mist directions and mist modes may be provided by using the first and second ultrasonic vibrators 422a and 422b based on combinations of different driving signals (output values) and patterns. In addition, turning off some of the ultrasonic vibrators may be used as one of the combinations, thereby providing various mist directions and mist modes.

According to an embodiment of the present invention, the first and second ultrasonic vibrators 422a and 422b may be alternately controlled. For example, after first controlling the first ultrasonic vibrator 422a to be turned on and the second ultrasonic vibrator 422b to be turned off, the first ultrasonic vibrator 422a may be controlled to be turned off, and the second ultrasonic vibrator 422b may be controlled to be turned on, and then, the first ultrasonic vibrator 422a may be controlled to be turned on again and the second ultrasonic vibrator 422b may be turned off again.

In addition, according to an embodiment of the present invention, the first and second ultrasonic vibrators 422a and 422b are alternately controlled to be alternately driven according to a predetermined cycle. Physical properties of manufactured ultrasonic vibrators are not exactly the same, such that a deviation, although small, occurs. Accordingly, if an alternating control period is too short, the shape and amount of mist changes too frequently, causing users inconvenience and degrading the perceived quality. In many cases, users clean the interior of the humidifier 1 after use for about one week. Accordingly, by setting the alternating control period to a one-week period, it is possible to prevent too frequent changes and to alternately operate the ultrasonic vibrators smoothly when entering a resting state.

After being driven, the ultrasonic vibrator 422 is allowed to rest in an off state for a predetermined period of time, which is helpful in improving service life characteristics. Accordingly, by driving the two ultrasonic vibrators 422a and 422b alternately one by one, a resting period may be secured, and service life characteristics may be improved.

By using the plurality of ultrasonic vibrators 422a and 422b, the humidifier 1 may operate normally if only one ultrasonic vibrator is in a normal state without failure, thereby improving the overall product life.

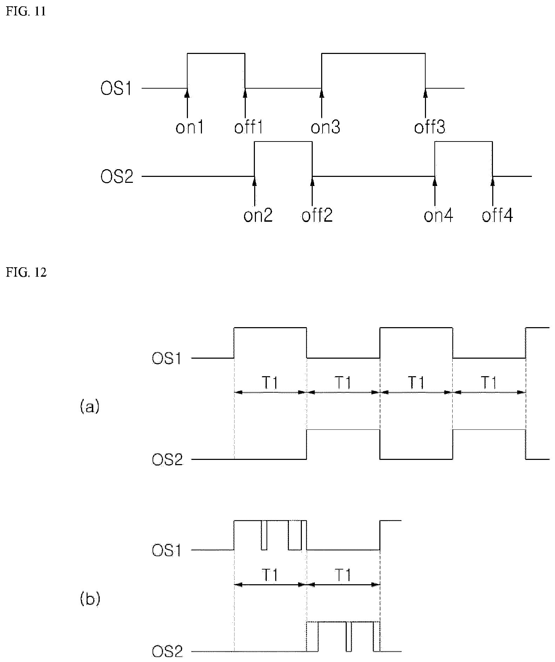

FIGS. 11 to 15 are diagrams referred to in the description of operation of first and second vibrators according to various embodiments of the present invention.

According to an embodiment of the present invention, every time a humidifying operation is turned on or the humidifier 1 is turned on, the humidifying assembly 40 may drive different one of the two ultrasonic vibrators 422a and 422b OS1 and OS2. Referring to FIG. 11, in a first round of humidifying operation, the first ultrasonic vibrator OS1 422a is turned on (on1), and then is turned off (off1), and the second ultrasonic vibrator OS2 422b remains in an off state. In a second round of humidifying operation, the second ultrasonic vibrator OS2 422b is turned on (on2), and then is turned off (off2), and the first ultrasonic vibrator OS 1 422a remains in an off state. In a third round of humidifying operation, the first ultrasonic vibrator OS1 422a is turned on (on3), and then is turned off (off3), and the second ultrasonic vibrator OS2 422b remains in an off state. In a fourth round of humidifying operation, the second ultrasonic vibrator OS2 422b is turned on (on4), and then is turned off (off3), and the first ultrasonic vibrator OS1 422a remains in an off state.

According to an embodiment of the present invention, the humidifying assembly 40 drives the first ultrasonic vibrator 422a during a first time period to atomize the water contained in the humidifying chamber 421, and drives the second ultrasonic vibrator 422b during a second time period after the first time period to atomize the water contained in the humidifying chamber 421.

In this case, the first time period and the second time period may be repeated according to a predetermined cycle. Depending on embodiments, the first time period and the second time period may have the same length. Alternatively, lengths of the respective time periods may also be set to different lengths.

FIG. 12 illustrates an example in which ultrasonic vibrators are controlled in the same time period T1.

Referring to (a) of FIG. 12, during a first part of the first time period T1, the first ultrasonic vibrator OS1 422a is driven, and during a second part of the second time period T1, the second ultrasonic vibrator OS2 422b is driven. This alternating pattern may be repeated. Accordingly, during a third part of the first time period T1, the first ultrasonic vibrator OS1 422a is driven, and during a fourth part of the second time period T1, the second ultrasonic vibrator OS2 422b is driven.

The humidifying assembly 40 may drive the ultrasonic vibrator 422 based on a water level of the humidifying chamber 421 detected by a water level sensor (not shown), the humidity of an indoor space detected by a humidity sensor (not shown), and the humidity, mist amount, and operation mode set by a user, and the like. Accordingly, in a time period or round of operation in which the first ultrasonic vibrator OS 1 422a and the second ultrasonic vibrator OS2 422b each are set to be driven separately, the first ultrasonic vibrator OS1 422a and the second ultrasonic vibrator OS2 422b may be turned on/off repeatedly according to the humidity, mist amount, operation mode, and the like.

In FIG. 12, (b) illustrates the case where in the first part of the first time period T1 in which only the first ultrasonic vibrator OS1 422a is driven, the second ultrasonic vibrator OS2 422b remains in an off state, and only the first ultrasonic vibrator OS1 422a is turned on/off.

In addition, (b) of FIG. 12 illustrates the case where in the first part of the first time period T1 in which only the second ultrasonic vibrator OS2 422b is driven, the first ultrasonic vibrator OS1 422a remains in an off state, and only the second ultrasonic vibrator OS2 422b is turned on/off.

According to an embodiment of the present invention, the humidifying assembly 40 may alternately control the first and second ultrasonic vibrators 422a and 422b based on a usage time.

For example, once a usage time of any one of the first and second ultrasonic vibrators 422a and 422b reaches a reference time, the humidifying assembly 40 may drive a remaining ultrasonic vibrator, and if a usage time of the remaining ultrasonic vibrator reaches the reference time, the humidifying assembly 40 may reset the usage time, thereby repeatedly performing the alternating control operation based on the usage time.

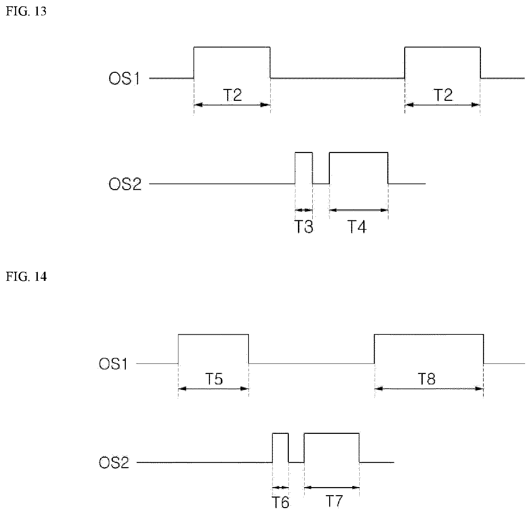

Referring to FIG. 13, the first ultrasonic vibrator OS1 422a may be first driven until a predetermined reference time T2 is reached. Then, the second ultrasonic vibrator OS2 422b may be driven until a predetermined reference time T2 is reached. If the second ultrasonic vibrator OS2 422b is driven during a time T3 shorter than the reference time T2, the second ultrasonic vibrator OS2 422b is driven again thereafter. If an accumulated usage time T3+T4 after reset reaches the reference time T2, the usage time of the ultrasonic vibrators 422 is reset. Then, the first ultrasonic vibrator OS1 422a may be used until the reference time T2.

In response to a usage time of an ultrasonic vibrator that is driven first, the usage time of a remaining ultrasonic vibrator may be determined without using the predetermined reference time T2.

Referring to FIG. 14, the first ultrasonic vibrator OS1 422a may be first driven during a predetermined time T5. Then, the second ultrasonic vibrator OS2 422b may be driven until a usage time of the second ultrasonic vibrator OS2 422b reaches the usage time T5 of the first ultrasonic vibrator OS1 422a. If the second ultrasonic vibrator OS2 422b is driven during a time T6 shorter than the usage time T5 of the first ultrasonic vibrator OS1 422a, the second ultrasonic vibrator OS2 422b is driven again thereafter. If an accumulated usage time T6+T7 of the second ultrasonic vibrator OS2 422b after reset reaches the usage time T5 of the first ultrasonic vibrator OS 1 422a, the usage time of the ultrasonic vibrators 422 is reset.

Then, the first ultrasonic vibrator OS1 422a may be used again until a predetermined time T8. In this embodiment, the reference time is not preset, such that the usage times T5 and T8 of the first ultrasonic vibrator OS1 422a may be changed. Subsequently, the second ultrasonic vibrator OS2 422b may be driven until the usage time of the second ultrasonic vibrator OS2 422b reaches the usage time T8 of the first ultrasonic vibrator OS 1 422a.

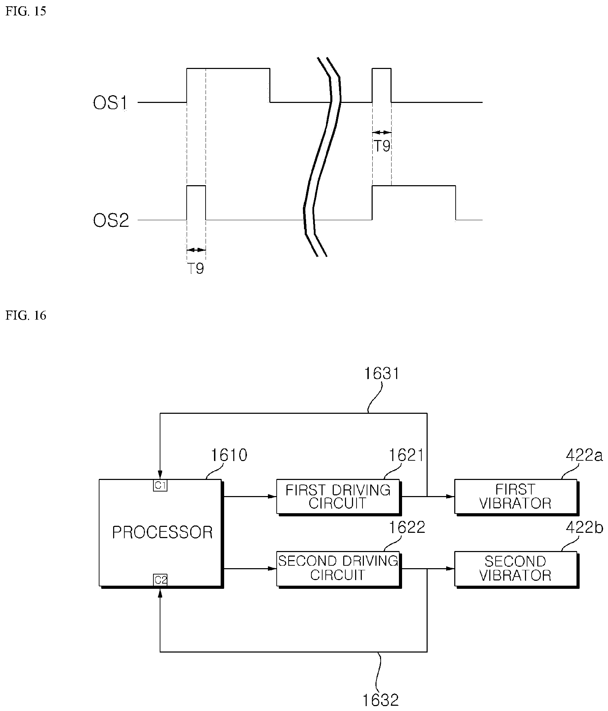

Referring to FIG. 15, the humidifying assembly 40 may drive both of the first and second ultrasonic vibrators 422a and 422b together during a predetermined initial driving time T9, and then after lapse of the initial driving time T9, the humidifying assembly 40 may turn off any one of the first and second ultrasonic vibrators 422a and 422b. Depending on specifications of the first and second ultrasonic vibrators 422a and 422b, a mist amount that meets a user's request may not be provided. Accordingly, the humidifying assembly 40 may drive both of the first and second ultrasonic vibrators 422a and 422b together during the initial driving time T9, and then after lapse of the initial driving time T9, the humidifying assembly 40 may turn off any one of the ultrasonic vibrators and then enters an alternating control mode.

FIG. 16 is a block diagram illustrating main components for controlling vibrators and diagnosing failure thereof according to an embodiment of the present invention.

Referring to FIG. 16, the humidifier 1 includes a first driving circuit 1621 configured to supply a first driving signal to the first ultrasonic vibrator 422a to drive the first ultrasonic vibrator 422a, and a second driving circuit 1622 configured to supply a second driving signal to the second ultrasonic vibrator 422b to drive the second ultrasonic vibrator 422b.

The first and second driving circuits 1621 and 1622 may drive the first and second ultrasonic vibrators 422a and 422b by generating a PWM signal for driving the ultrasonic vibrator 422 under the control of the processor 1610. The processor 1610 may be the controller 34 or any one processor included in the controller 34.

First and second feedback lines 1631 and 1632, connected between the first and second driving circuits 1621 and 1622 and the first and second ultrasonic vibrators 422a and 422b, may be connected to the processor 1610. For example, the processor 1610 includes first and second terminals C1 and C2 which are connected to the first and second feedback lines 1631 and 1632, respectively.

The humidifier according to an embodiment of the present invention includes the case 10, the humidifying assembly 40 disposed in the case 10 and including the first and second ultrasonic vibrators 422a and 422b, the first driving circuit 1621 configured to supply the first driving signal to the first ultrasonic vibrator 422a to drive the first ultrasonic vibrator 422a, the second driving circuit 1622 configured to supply the second driving signal to the second ultrasonic vibrator 422b to drive the second ultrasonic vibrator 422b, and the processor 1610 connected between the first driving circuit 1621 and the first ultrasonic vibrator 422a through the first feedback line 1631 and connected between the second driving circuit 1622 and the second ultrasonic vibrator 422b through the second feedback line 1632, in which the processor 1610 turns off any one of the first and second ultrasonic vibrators 422a and 422b based on a signal input through the first and second feedback lines 1631 and 1632.

The processor 1610 receives the first and second driving signals through the first and second feedback lines 1631 and 1632, to determine whether a failure occurs in the first and second ultrasonic vibrators 422a and 422b. The processor 1610 may determine whether a failure occurs based on an analog signal output from the first and second driving signals 1621 and 1622. For example, in the case where the first and second driving signals input to the first and second ultrasonic vibrators 422a and 422b are 2.5 v or 3. 8 v, if a high signal of 5 v or more is input, the processor 1610 may determine that a short circuit failure occurs, and if a low signal of 0 V is input, the processor 1610 may determine that an open circuit failure occurs.

Depending on embodiments, the first and second feedback lines 1631 and 1632 may include an amplifier circuit for signal amplification, a signal processing circuit for outputting a predetermined high signal for a signal at a predetermined level or higher and outputting a predetermined low signal for a signal at a predetermined level or lower, etc., thereby determining the occurrence of failure with improve accuracy.

Upon determining that any one of the first and second ultrasonic vibrators 422a and 422b breaks down, the processor 1610 may maintain the broken ultrasonic vibrator in an off state, and may operate only a remaining ultrasonic vibrator.

In addition, upon determining that any one of the first and second ultrasonic vibrators 422a and 422b breaks down, the processor 1610 may control information about the broken ultrasonic vibrator to be output to a display (not shown).

Alternatively, replacing the ultrasonic vibrators one by one is not cost-effective since it is not easy to separately replace the ultrasonic vibrators, such that when both of the first and second ultrasonic vibrators 422a and 422b break down, the processor 1610 may control final failure information to be output to the display (not shown).

Alternatively, upon determining that any one of the first and second ultrasonic vibrators 422a and 422b breaks down, the processor 1610 may control information about the broken ultrasonic vibrator to be output to the display (not shown), and if both of the first and second ultrasonic vibrators 422a and 422b break down, the processor 1610 may control final failure information to be output to the display (not shown).

While FIG. 4 illustrates an example of supplying water using a floating valve and the structure of the humidifying assembly 40, the present invention is not limited thereto. For example, the embodiments of the present invention may supply water by using a solenoid valve, and may also be applied to the humidifying assembly 40 having other structures.

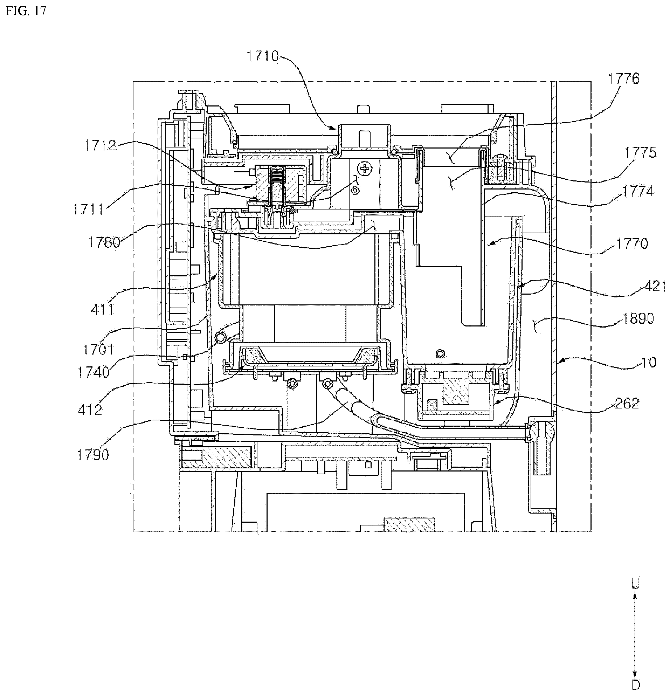

FIG. 17 is a longitudinal cross-sectional view of a humidifying assembly according to an embodiment of the present invention.

Referring to FIG. 17, the humidifying assembly 40 includes a main housing 1701, a supply pipe 1710, a first valve 1712, a heating chamber 411, a first connection pipe 1740, a drain pipe 1790, a humidifying chamber 421, and a partition cover 1770.

The main housing 1701 may be disposed in the case 10. The main housing 1701 may accommodate the humidifying chamber 421 and the heating chamber 411 which will be described below. The main housing 1701 may have an open top.

The supply pipe 1710 may be a pipe through which water is supplied to the humidifying assembly 40. The supply pipe 1710 may be connected to the humidifying assembly 40. Water contained in the water tank 20 may be supplied to the humidifying assembly 40 through the supply pipe 1710. For example, the water stored in the water tank 20 may move to the heating chamber 411 through the supply pipe 1710. A supply chamber 1711 may be formed in the supply pipe 1710. The water introduced into the supply pipe 1710 may pass through the supply chamber 1711 to flow to the heating chamber. The water introduced into the supply pipe 1710 may be temporarily stored in the supply chamber 1711.

The first valve 1712 may control the flow of water supplied to the humidifying assembly 40 through the supply pipe 1710. For example, when the first valve 1712 is opened, the water stored in the supply chamber 1711 may move to the heating chamber 411. By contrast, if the first valve 1712 is closed, the supplied water may be temporarily stored in the supply chamber 1711. The first valve 1712 may be opened and closed in response to an electrical signal of the controller 34. The first valve 1712 may receive power from the controller 34. For example, the first valve 1712 may be a solenoid valve. The first valve 1712 may be disposed above the heating chamber 411. The first valve 1712 may be disposed at the supply pipe 1710. For example, the first valve 1712 may be disposed between the heating chamber 411 and the supply pipe 1710. The first valve 1712 may be upwardly spaced apart from the heating chamber 411. For example, the first valve 1712 may be upwardly spaced apart from an upper surface of the heating chamber 411.

The heating chamber 411 may be disposed in the main housing 1701. The heating chamber 411 may heat the water introduced through the supply pipe 1710. The heating chamber 411 may heat and sterilize water. The water heated in the heating chamber 411 may flow to the humidifying chamber 421.

The first connection pipe 1740 may be a pipe through which water stored in the heating chamber 411 flows to the humidifying chamber 421. The first connection pipe 1740 may have a height that decreases toward a downstream side. The first connection pipe 1740 may be inclined downwardly toward the downstream side. The first connection pipe 1740 may have high thermal conductivity. The water heated in the heating chamber 411 may decrease in temperature while flowing in the first connection pipe 1740.

The drain pipe 1790 may be connected to the heating chamber 411. The drain pipe 1790 may discharge remaining water stored in the heating chamber 411. The remaining water may be discharged to the outside of the case 10 through the drain pipe 1790. The drain pipe 1790 may be connected to a lower part of the heating chamber 411. For example, the drain pipe 1790 may be connected to a bottom surface of the heating chamber 411.

The humidifying chamber 421 may generate humidified air by using the supplied water. The humidified air may refer to air containing mist and/or water vapor. The humidifying chamber 421 may generate humidified air by using any one of an ultrasonic type, a heating type, an evaporative type, and a disk type. For example, the humidifying chamber 421 may generate humidified air by atomizing the supplied water using an ultrasonic vibrator. A humidifier water tank may include a vibrator 262.

The vibrator 262 may be disposed on a bottom surface of the humidifying chamber 421. The vibrator 262 may atomize water into fine droplets by using ultrasonic vibration. The vibrator 262 may include the ultrasonic vibrator 422 described above.

The partition cover 1770 may be disposed at an upper side of the main housing 1701. The partition cover 1770 may cover the upper part of the heating chamber 421. The partition cover 1770 may separate a passage for water to flow into the humidifying chamber 421 from a passage for water to be discharged from the humidifying chamber 421. For example, the partition cover 1770 may include an air supply pipe 1710 which is a passage through which a portion of upwardly flowing air, flowing in an internal air-blowing passage 1890, is introduced into the humidifying chamber 421, and a discharge pipe 1774 through which the portion of the upwardly flowing air introduced into the humidifying chamber 421 and mist remaining stagnant in the humidified chamber 421 are discharged together. The air supply pipe 1710 may connect the internal air-blowing passage 1890 and the humidifying chamber 421. The upwardly flowing air flowing into the humidifying chamber 421 may flow while pulling the mist generated in the humidifying chamber 421. In this manner, the mist generated in the humidifying chamber 421 may be discharged. The discharge pipe 1774 may extend in an up-down direction. The discharge pipe 1774 may form a discharge passage 1775. A humidified air discharge port 1776 may be formed at one end of the discharge pipe 1774. The discharge pipe 1774 may be inserted into the humidifying chamber 421.

The humidifying assembly 40 may include a communication passage 1780 connecting the heating chamber 411 and the humidifying chamber 421. The communication passage 1780 may connect an upper portion of the heating chamber 411 and an upper portion of the humidifying chamber 421. Water vapor may be generated when the heating chamber 411 heats the supplied water. The generated water vapor may flow to the humidifying chamber 421 through the communication passage 1780. The discharge pipe 1774 may be opened toward the communication passage 1780. The communication passage 1780 may be connected to the discharge passage 1775. The water vapor moving from the heating chamber 411 to the humidifying chamber 421 through the communication passage 1780 may be discharged through the discharge pipe 1774. In this manner, the humidified air may contain the water vapor, generated in the heating chamber 411, the mist generated in the humidified chamber 421, and the upward air flow generated by the blower fan 32.

The humidified air generated in the heating chamber 411 and the humidified air generated in the humidifying chamber 421 may be discharged together, such that pleasant, humidified air may be provided.

FIG. 18 is a schematic view of a humidifier according to an embodiment of the present invention.

Referring to FIG. 18, a humidifier 1 according to an embodiment of the present invention includes a case 10, a water tank 20, a humidifying assembly 40, and a blower fan 32.

Indoor air may be introduced through an inlet 11 formed in the case 10 (Fi). The inlet 11 may be formed at a lower part of the case 10. The air introduced into the case 10 may flow through a channel formed therein (Fi). The air flowing in the case 10 may be discharged back into a room through the outlet 12 formed at an upper part of the case 10 (Fi). In this case, the discharged air may have a higher humidity than the humidity of drawn air.

The water tank 20 may store water. The water tank 20 may include a water storage space 1810 in which water is contained. The water stored in the water storage space 1810 may be supplied to the humidifying assembly 40 (Fsl). The humidifying assembly 40 may generate humidified air by using the supplied water.

The humidifying assembly 40 may generate humidified air. The humidified air may contain mist and/or water vapor. That is, the humidified air may refer to air containing mist and/or water vapor. The humidified air may have a higher humidity than the humidity in a room.

The humidifying assembly 40 may include a heating chamber 411. The water supplied from the water tank 20 may be introduced into the heating chamber 411 (Fsl). The heating chamber 411 may heat the water supplied from the water tank 20. The heating chamber 411 may heat and sterilize the supplied water.

The humidifying assembly 40 may include a humidifying chamber 421. The water sterilized in the heating chamber 411 may move to the humidifying chamber 421 (Fsl). The humidifying chamber 421 may generate humidified air by using the water supplied from the heating chamber 411. The humidifying chamber 421 may generate humidified air by using any one of an ultrasonic type, a heating type, an evaporative type, and a disk type. For example, the humidifying chamber 421 may generate humidified air by atomizing the supplied water using an ultrasonic vibrator.

The blower fan 32 may be disposed in the case 10. The blower fan 32 may be disposed below the humidifying assembly 40. The blower fan 32 may generate a flow of air flowing in the case. The blower fan 32 may generate a flow of air flowing from the inlet 11 toward the outlet 12 (Fi). For example, the blower fan 32 may generate an upward flow of air flowing from the inlet 11, formed at a lower portion of the case 10, toward the outlet 12 formed in an upper surface of the case 10.

The case 10 may include an internal air-blowing passage 1890. The internal air-blowing passage 10 may be formed in the case 10. The internal air-blowing passage 1890 may be a passage through which air blown by the blower fan 32 flows. The air introduced through the inlet 11 may flow toward the blower fan 32 through a suction passage 330 (Fi). The air, having passed through the blower fan 32, may flow through the internal air-blowing passage 1890 (Fi).

The case 10 may include a discharge passage 1000. The discharge passage 1000 may be formed in the case 10. The air, having passed through the internal air-blowing passage 1890, may flow to the discharge passage 1000 (Fd). The discharge passage 1000 may be disposed at an upper part of the internal air-blowing passage 1890. The discharge passage 1000 may be disposed on a downstream side of the internal air-blowing passage 1890.

The discharge passage 1000 may include a first discharge passage 1000a and a second discharge passage 1000b. The discharge port 12 may include a first discharge port 12a corresponding to the first discharge passage 1000a and a second discharge port 12b corresponding to the second discharge passage 1000b. The second discharge passage 1000b may be formed in the case 10. The first discharge passage 1000a may be formed within the second discharge passage 1000b. The second discharge passage 1000b may be connected to the internal air-blowing passage 1890. The second discharge passage 1000b may be disposed on a downstream side of the internal air-blowing passage 1890. A portion of the air, having passed through the internal air-blowing passage 1890, may flow upward through the second discharge passage 1000b (Fd2). The air, having passed through the second discharge passage 1000b, may be supplied to an indoor space through the second discharge port 12b (Fd2). A remaining portion of the air, having passed through the internal air-blowing passage 1890, may flow to the humidifying assembly 40 (Fs2). The remaining portion of the air, having passed through the internal air-blowing passage 1890, may flow to the humidifying chamber 421 (Fs2). The remaining portion of the air introduced into the humidifying chamber 421 may flow through the first discharge passage 1000a along with the humidified air generated in the humidifying chamber 421 (Fd1). The humidified air flowing through the first discharge passage 1000a may be supplied to an indoor space through the first discharge port 12a (Fd1).

While the preferred embodiments have been particularly shown and described, the present specification shall not be limited to the particular embodiments described above, and it will be understood by an ordinary skilled person in the art that various changes in form and details may be made therein without departing from the scope of the present invention as defined by the following claims, and the alternative embodiments should not be individually understood from the inventive concept and prospect of the present invention.

## Claims

1. A humidifier comprising:
a case (10); and
a humidifying assembly (40) disposed in the case (10) and configured to generate mist,
wherein the humidifying assembly (40) comprises a humidifying chamber (421) defining a space in which water is contained, and first and second ultrasonic vibrators (422a, 422b) disposed under the humidifying chamber (421),
wherein the humidifying assembly (40) is configured to drive one of the first and second ultrasonic vibrators (422a, 422b), or drive the first and second ultrasonic vibrators (422a, 422b) with different driving signals.

2. The humidifier of claim 1, wherein a duty ratio of a Pulse Width Modulation, PWM, driving signal for driving the first ultrasonic vibrator (422a) is different from a duty ratio of a PWM driving signal for driving the second ultrasonic vibrator (422b).

3. The humidifier of claim 2, wherein the duty ratios of the PWM driving signals for driving the first ultrasonic vibrator (422a) and the second ultrasonic vibrator (422b) are individually adjusted.

4. The humidifier of any one of claims 1 to 3, wherein in a predetermined mode, variable resistor values are changed differently so that a value of a variable resistor, connected to the first ultrasonic vibrator (422a), is different from a value of a variable resistor connected to the second ultrasonic vibrator (422b).

5. The humidifier of any one of claims 1 to 4, wherein each time the humidifying assembly (40) is turned on, the humidifying assembly (40) is configured to drive a different ultrasonic vibrator (422a, 422b).

6. The humidifier of any one of claims 1 to 5, wherein the humidifying assembly (40) is configured to drive the first ultrasonic vibrator (422a) during a first time period to atomize the water contained in the humidifying chamber (421), and to drive the second ultrasonic vibrator (422b) during a second time period after the first time period to atomize the water contained in the humidifying chamber (421).

7. The humidifier of claim 6, wherein the first time period and the second time period are repeated according to a predetermined cycle.

8. The humidifier of claim 6 or 7, wherein the first time period and the second time period have a same length.

9. The humidifier of any one of claims 1 to 8, wherein in response to a usage time of any one of the first and second ultrasonic vibrators (422a, 422b) reaching a reference time, the humidifying assembly (40) is configured to drive a remaining ultrasonic vibrator (422a, 422b), and in response to a usage time of the remaining ultrasonic vibrator (422a, 422b) reaching the reference time, the humidifying assembly (40) is configured to reset the usage time.

10. The humidifier of any one of claims 1 to 9, wherein the humidifying assembly (40) is configured to drive the first and second ultrasonic vibrators (422a, 422b) during a predetermined initial driving time, and then after lapse of the initial driving time, the humidifying assembly (40) is configured to turn off any one of the first and second ultrasonic vibrators (422a, 422b).

11. The humidifier of any one of claims 1 to 10, further comprising:
a first driving circuit (1621) configured to supply a first driving signal to the first ultrasonic vibrator (422a) to drive the first ultrasonic vibrator (422a);
a second driving circuit (1622) configured to supply a second driving signal to the second ultrasonic vibrator (422b) to drive the second ultrasonic vibrator (422b); and
a processor (1610) configured to receive the first and second driving signals through first and second feedback lines, connected between the first and second driving circuits (1621, 1622) and the first and second ultrasonic vibrators (422b), to determine whether a failure occurs in the first and second ultrasonic vibrators (422a, 422b).

12. The humidifier of claim 11, wherein upon determining that any one of the first and second ultrasonic vibrators (422a, 422b) breaks down, the processor (1610) is configured to maintain the broken ultrasonic vibrator (422a, 422b) in an off state, and to operate only a remaining ultrasonic vibrator (422a, 422b).

13. The humidifier of any one of claims 1 to 12, wherein the humidifying assembly (40) comprises:
an inlet (45) through which air is introduced into the humidifying chamber (421);
an outlet (46) through which mist generated in the humidifying chamber (421) is discharged;
a heating device (41) configured to heat water and communicating with the humidifying chamber (421); and
a body (401) having a first opening (4012) in communication with the heating device (41), and a second opening (4013) in communication with the humidifying chamber (421),
wherein the first and second ultrasonic vibrators (422a, 422b) are spaced below the outlet (46).

14. The humidifier of any one of claims 1 to 13, further comprising:
a suction port (11) through which air is introduced into the case (10);
a fan (32) disposed in the case (10);
a discharge port (24) through which the air introduced through the suction port (11) flows;
an air-blowing passage (121) through which air blown by the fan flows, the air-blowing passage (121) extending toward the discharge port (24); and
a humidification passage (122) connecting the humidifying assembly (40) and the discharge port (24), the humidification passage (122) separated from the air-blowing passage (121).

15. The humidifier of any one of claims 1 to 14, wherein the humidifying assembly (40) is configured to alternately drive the first and second ultrasonic vibrators (422a, 422b) according to a predetermined cycle.
